(19) Europäisches Patentamt
European Patent Office
Office européen des brevets

(11) Publication number: 0 383 492 A2

# (12) EUROPEAN PATENT APPLICATION

(21) Application number: 90301380.3

(22) Date of filing: 09.02.90

(51) Int. Cl.5: C08G 18/30, C08L 75/00, C04B 26/10

(30) Priority: 14.02.89 GB 8903323
21.12.89 GB 8928816

(43) Date of publication of application:
22.08.90 Bulletin 90/34

(84) Designated Contracting States:
AT BE CH DE DK ES FR GB GR IT LI LU NL SE

(71) Applicant: IMPERIAL CHEMICAL INDUSTRIES PLC
Imperial Chemical House, Millbank
London SW1P 3JF(GB)

(72) Inventor: Moore James
Hunting Lodge, Finstall Park, Walnut Lane
Bromsgrove, Worcestershire B60 3BU(GB)

(74) Representative: James, David Gomer et al
Imperial Chemical Industries PLC Legal Department: Patents Po Box 6 Bessemer Road
Welwyn Garden City Herts, AL7 1HD(GB)

## (54) Dispersion system for rapid curing cement compositions.

(57) Stable dispersions of dispersable isocyanate-reactive organic compounds in water are produced employing a stabiliser system comprised of a poly(hydroxyalkyl)amine, an ethoxylated alkyl phenol and a fatty acid. When these compositions are blended with an hydraulic cement, a filler and an organic polyisocyanate, a rapid curing cement composition is produced which will yield surfaces possessing desireable appearance and properties.

EP 0 383 492 A2

# IMPROVED DISPERSION SYSTEM FOR RAPID CURING CEMENT COMPOSITIONS

Rapidly curing cement compositions comprised of polyisocyanates and organic compounds containing isocyanate-reactive groups have been described in the past. Thus, for example, U.K. Patent 1,192,864 discloses rapidly curing cement compositions containing as essential elements an hydraulic cement, a silica filler, water and an organic compound containing a plurality of isocyanate groups, which compositions typically further comprise an isocyanate-reactive compound such as a polyhydric alcohol, an aminoalcohol, a polyamine, a polyester or a polyesteramide. These cement compositions set very rapidly and make it possible to obtain floors which are sufficiently stable to walk upon as quickly as 1 to 2 hours after being laid.

Because of such rapid setting, it is necessary to package such compositions in two or more components, with the polyisocyanate-containing component being separated from the isocyanate-reactive organic compound-containing component until such components are mixed immediately prior to application.

In order to improve the ease and accuracy with which such component may be blended, the isocyanate-reactive compound-containing component of such rapidly curing cement composition is preferably packaged in the form of an aqueous suspension. However, during shipment or storage such component may be exposed to extreme temperature conditions, or may be kept in storage for prolonged periods, such that the isocyanate-reactive organic compound will come out of suspension. Should this occur, such component, when blended with the polyisocyanate-containing component may not yield a desirable resultant cement composition. Consequently, it would be desireable to possess a dispersion stabiliser composition which would increase the stability of the isocyanate-reactive component dispersion should such component be subjected to extreme temperatures or prolonged storage prior to use.

It has now been found that a more stable aqueous dispersion of such isocyanate-reactive organic compound-containing compositions (which are typically polyols) may be obtained by employing a stabiliser system which comprises: (a) a poly(hydroxyalkyl)amine (b) an ethoxylated alkylphenol; and (c) fatty acid. This dispersion system is particularly desirable in that all of the components are capable of bonding into the cement composition such that they will not leach out after setting.

Accordingly, in one aspect, the present invention is directed to a stabilised dispersion comprising:

a) a dispersable isocyanate-reactive organic compound;
b) water; and
c) a stabiliser system comprising:
  i) a poly(hydroxyalkyl)amine;
  ii) an ethoxylated alkyl phenol; and
  iii) a fatty acid.

In another aspect, this invention is directed to a rapidly curing cement composition comprising:

(a) an hydraulic cement;
(b) a filler;
(c) an organic polyisocyanate;
(d) a dispersable isocyanate-reactive organic compound;
(e) water; and
(f) a stabiliser system comprising:
  i) a poly(hydroxyalkyl)amine;
  ii) an ethoxylated alkyl phenol; and
  iii) a fatty acid.

In an additional aspect, this invention is directed to a method of producing a cement surface, which method comprises the steps of;

A) blending a mixture comprising an hydraulic cement, a filler, an organic polyisocyanate, a dispersable isocyanate-reactive organic compound, water, a poly(hydroxyalkyl)amine, an ethoxylated alkyl phenol, and a fatty acid to form a cement composition;

B) forming such cement composition into a surface, and

C) allowing such surface to harden.

In yet another aspect, this invention is directed to a surface produced in accordance with the method of this invention.

As is employed herein the term poly(hydroxyalkyl)amine means a compound containing at least one secondary or tertiary amine moiety having substituted thereon at least one straight claim or branched $C_2$ - $C_{12}$ hydroxyalkyl group with the proviso that if only one amino moiety is present such moiety has at least two hydroxyalkyl groups substituted thereon. Illustrative of such compounds are diethanolamine, triethanol

amine, methyldiethanolamine, triisopropanolamine, N,N,N′,N′-tetrakis(2-hydroxypropyl) ethylenediamine and the like. We have obtained useful results when the poly(hydroxyalkyl) amine is N,N,N′,N′-tetrakis (2-hydroxypropylethylenediamine).

The ethoxylated alkyl phenols which may be employed in the practice of this invention are compounds having the structural formula:

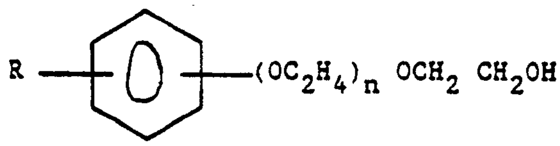

Wherein R= $C_1$ - $C_{16}$ alkyl ; and n = 4-11. The group R may be a mixture of groups and this mixture may be of groups having different numbers of carbon atoms, or be a mixture of different isomers or may be both of these. The group R typically contains at least six carbon atoms. We have obtained a useful result when the ethoxylated alkyl phenol is one in which R is a mixture of nonyl isomers and the value of n is 8 to 9.

Among the fatty acids which may be employed in the practice of this invention are saturated monocarboxylic acids of the normal fatty acid series which contain from 2 to 18 carbon atoms, including the mixed fatty acids derived from the saponification of natural glycerides; and unsaturated fatty acids, for example, elaeostearic, linolenic, linoleic and oleic acids.

In general, the weight ratio of fatty acid to poly(hydroxyalkyl)amine will range from 10:1 to 1:10, with ratios of 3:1 to 1:3 being typically preferred. Similarly the weight ratio of ethoxylated alkyl phenol to poly-(hydroxyalkyl)amine will generally range from 10:1 to 1:10, with ratios of 3:1 to 1:3 being preferred for most applications.

The stabiliser system employed in the practice of this invention is typically employed in amounts of between 0.5 parts and 20 parts by weight per 100 parts by weight of the isocyanate-reactive organic compound to be dispersed. In most cases, between 2 and 10 parts of stabiliser system per 100 parts by weight of dispersable isocyanate-reactive organic compound are preferably employed, with between 3 and 7 parts of stabiliser system per 100 parts by weight of dispersable isocyanate-reactive organic compound being most preferred.

As is employed herein, the term "hydraulic cement" is used in its usual sense to denote the class of structural materials which are applied in admixture with water and thereafter harden or set as a result of physical or chemical changes which consume the water present. As well as Portland cement, this term includes:

1. Rapidly hardening cements, as characterised by those with high alumina contents.

2. Low-heat cements as characterised by high percentages of dicalcium silicate and tetra-calcium alumino ferrite and low percentages of tricalcium silicate and tricalcium aluminate.

3. Sulphate resisting cements as characterised by unusually high percentages of tricalcium silicate and dicalcium silicate and unusually low percentages of tricalcium aluminate and tetracalcium alumino ferrite.

4. Portland blast-furnace cement as characterised by a mixture of Portland cement clinker and granulated slag.

5. Masonry cements as characterised by mixtures of Portland cement and one or more of the followings: hydrated lime, granulated slag, pulverised limestone, colloidal clay, diatomaceous earth or other finely divided forms of silica, calcium stearate and paraffin.

6. Natural cements as characterised by material obtained from deposits in the Lehigh Vally, USA.

7. Lime cements as characterised by oxide of calcium in its pure or impure forms and whether containing or not some argillaceous materials.

8. Selenitic cement as characterised by the addition of 5 - 10% of plaster of Paris to lime.

9. Pozzolanic cement as characterised by the mixture of pozzolana, trass keiselguhr, pumice, tufa, santorin earth or granulated slag with lime mortar.

10. Calcium sulphate cements as characterised by those depending on the hydration of calcium sulphate and including plaster of Paris, Keene's cement and Parian cement.

The preferred hydraulic cement is Portland cement. There may also be used white Portland cement which is a cement of low iron and carbon content manufactured from specially selected ingredients.

As examples of fillers which may be employed there may be mentioned siliceous fillers such as sand and gravel having a low clay content, preferably washed and having a particle size in the range of between

0.076 mm and 4 cm.

These materials may be in their natural state or they may be artificially coloured, for example, by application of a dyestuff or pigment. Fragments of glass, which may be clear, translucent or opaque, colourless or coloured, are also suitable. Other fillers which may be used are materials which have a low density compared with the siliceous fillers mentioned above, for example, fragments of colourless or mass-pigmented plastic in the form of chips, turnings, tape or granules, conveniently the plastic waste resulting from the trimming of injection moulded articles or from other moulding processes. Suitable plastic materials include thermoplastic or thermosetting polymers and copolymers, for example, nylon polymers, polyvinyl chloride, vinyl chloride/vinyl acetate copolymers, urea/formaldehyde polymers, phenol/formaldehyde polymers, melamine/formaldehyde polymers, acetal polymers and copolymers, acrylic polymers and copolymers, acrylonitrile/butadiene/styrene terpolymers, cellulose acetate, cellulose acetate butyrate, polycarbonates, polyethylene terephthalates, polystyrenes, polyurethanes, polyethylenes, and polypropylenes.

There may also be used foamed plastics such as polystyrene foam and polyurethane foam, sawdust, wood chips, pumice, vermiculite and fibrous materials of natural or synthetic origin, for example, glass fibre, cotton, wool, polyamide fibre, polyester fibre, and polyacrylonitrile fibre.

By the use of low density fillers the overall density of the cured products resulting from the compositions of the present invention may be greatly reduced. Filler having a fine particle size, by which is meant in the range from 75 microns to 1 micron, may also be used, and as examples of such materials there may be mentioned power station fly ash, expanded clay, foamed slag, mica, chalk, talc, clays such as china clay, barytes, silica, and powdered slate, reduced to the required degree of subdivision where necessary by grinding, milling, micronising or other suitable means.

Other suitable fillers include aluminium silicate refractory aggregates made by high temperature calcination of a china clay specially selected for low alkali content, and obtainable commercially under the name "Molochite" (Registered Trade Mark); also crushed mineral aggregates manufactured from blue flints obtained from deposits in the Thames Valley and available commerically under the name "Flintag" (Registered Trade Mark) as well as multicloloured calcined flints.

The organic polyisocyanates which is employed may be a simple polyisocyanate or it may be an isocyanate-terminated prepolymer obtained by the reaction of an excess of a simple polyisocyanate with a hydroxyl-terminated polyether, polyester or polyesteramide.

As examples of polyisocyanates there may be mentioned aliphatic diisocyanates such as hexamethylene diisocyanate, tetramethylene diisocyanate, 2,2,4- and 2,4,4-trimethyl hexamethylene diisocyanates, aromatic diisocyanates such as tolylene-2,4-diisocyanate, tolylene-2,6-diisocyanate, diphenylmethane-4, 4′-diisocyanate, 3-methyldiphenyl methane-4, 4′-diisocyanate, m- and p-phenylene diisocyanate, chlorophenylene-2,4-diisocyanate, xylylene diisocyanate, naphthalene-1,5-diisocyanate, diphenyl-4,4′-diisocyanate, and 4,4′-diisocyanate-3,3-dimethydiphenyl; diphenylether diisocyanates; and cycloaliphatic diisocyanates such as dicyclohexylmethane diisocyanates, methylcyclohexylene diisocyantes and 3-isocyanatomethyl-3,5,5,-trimethylcyclohexyl isocyanate. Triisocyanates which may be used include aromatic triisocyanates such as 2,4,6-triisocyanatotoluene and triisocyanatodiphenyl ether. Examples of other suitable organic polyisocyanates include the reaction products of an excess of a diisocyanate with simple polyhydric alcohols such as ethylene glycol, 1,4- 1,3- and 2,3-butanediols, diethylene glycol, dipropylene glycol, pentamethylene glycol, hexamethylene glycol, neopentylene glycol, propylene glycol, glycerol, hexanetriols, trimethylolpropane, pentaerythritol and low molecular weight reaction products of the above polyols with ethylene oxide or propylene oxide.

There may also be used uretedione dimers and isocyanurate polymers of diisocyanates, for example, tolylene-2,4-diisocyanate, tolylene-2,6-diisocyanate and mixtures thereof, and the biuret polyisocyanates obtained by the reaction of polyisocyanates with water.

Mixtures of polyisocyanates may be used, including the mixtures obtained by the phosgenation of the mixed polyamines prepared by the reaction of formaldehyde with aromatic amines such as aniline and ortho-toluidine under acidic conditions. An example of the latter polyisocyanate mixture is that known as crude MDI, which is obtained by phosgenation of the mixed polyamines prepared by the reaction of formaldehyde with aniline in the presence of hydrochloric acid and which comprises diphenylmethane-4,4′-diisocyanate in admixture with isomers thereof and with methylene-linked polyphenyl polyisocyanates containing more than two isocyanate groups.

Examples of suitable hydroxyl terminated polyesters and polyesteramides of use in the preparation of prepolymers (mixtures of polyesters and polyesteramides may be used if desired) are those obtained by known methods from carboxylic acids, glycols, and as necessary, minor proportions of diamines or aminoalcohols. Suitable dicarboxylic acids include succinic, glutaric, adipic, suberic, azelaic, sebacic, phthalic, isophthalic and terephthalic acids and mixtures of these. Examples of dihydric alcohols include

ethlene glycol, 1:2-propylene glycol, 1:3-butylene glycol, hexamethylene glycol, decamethylene glycol and 2:2-diethyltrimethylene glycol. Suitable diamines or amino-alcohols include hexamethylene diamine, ethylene diamine, mono-ethanolamine and phenylenediamines. Small proportions of polyhydric alcohols such as glycerol or trimethylolpropane may also be used, in which case branched polyesters and polyesteramides are obtained.

As examples of hydroxyl terminated polyethers which may be reacted with an excess of an organic polyisocyanates as defined above to form a prepolymer there may be mentioned polymers and copolymers of cyclic oxides, for example 1:2-alkylene oxides such as ethylene oxide, epichlorohydrin, 1:2-propylene oxide, 1:2-butylene oxide and 2:3-butylene oxide, oxycyclobutane and substituted oxycyclobutanes and tetrahydrofuran. There may be mentioned polyethers obtained by the polymerisation of an alkylene oxide in the presence of a basic catalyst and water, glycol or a primary monoamine. Mixtures of such polyethers may be used.

Other prepolymers which may be used in the compositions of the present inventions are those obtained by reacting a coal tar pitch which contains isocyanate-reactive groups with an excess of an organic polyisocyanate defined above, optionally together with an organic compound containing isocyanate-reactive groups such as the polyesters, polyesteramides and polyethers defined above.

The dispersable isocyanate-reactive organic compounds which may be employed in the practice of this invention include any of the hydroxyl-terminated polyethers, polyesters or polyesteramides disclosed above as being suitable for the preparation of isocyanate-terminated prepolymers and also the simple polyhydric alcohols containing from 2 to 6 carbon atoms and from 2 to 4 hydroxyl groups and the low molecular weight reaction products thereof with ethylene oxide or propylene oxide.

Further, other dispersable isocyanate-reactive organic compounds which may be used include aminoalcohols such as monoethanolamine, polyamines, such as ethylene diamine, hexamethylene diamine, m- and p-phenylene diamines and 2,4-and 2,6-diaminotoluenes, epoxy resins which also contain isocyanate-reactive groups, for example, the hydroxyl group-containing products obtained by reaction between diphenylolpropane and epichlorohydrin, drying oil and non-drying oil modified alkyd resins, castor oil, hydrogenated castor oil, urethane oils, which are the reaction products of diisocyanates with the alcoholysis products of drying oil, for example, mono- and di-glycerides from linseed oil, and urethane alkyds, which are alkyd resins in the manufacture of which a part of the phthalic anhydride has been replaced by diisocyante.

A further isocyanate-reactive resin which may be present in the compositions of this invention is that obtained by the high temperature reaction of castor oil with a complex resin obtained by reacting together natural resin, glycerol and a resol resin at a high temperature. The castor oil and complex resin may be reacted in the proportions from 95:5 to 20:80 parts by weight, generally at a temperature from 230 to 250°C for a time of from 1/2 to 2 hours. Typically, castor oil and the complex resin in the proportion of 4:1 by weight are heated together at temperature of approximately 240°C for about 45 minutes. Most preferably to prepare the complex resin, natural rosin (colophony), glycerol and the resol (which is conveniently prepared by the condensation of 1 mole of diphenylolpropane with approximately 4 moles of formaldehyde under aqueous alkaline conditions at moderate temperatures) in the proportions of about 8.2:1.1:1.0 by weight are heated at a temperature of up to 275°C in an inert atomsphere until the acid value is less than 20 mg. KOH/g.

In addition, the compositions of this invention may further comprise water-soluble, isocyanate-reactive polymers, such as derivatives of cellulose, for example, alkyl, hydroxyalkyl, carboxy alkyl and alkyl hydroxy alkyl ethers of cellulose such as methyl cellulose, ethyl cellulose, hydroxy ethyl cellulose, sodium carboxy methyl cellulose, methyl hydroxypropyl cellulose, ethyl hydroxy propyl cellulose, ethyl hydroxyethyl cellulose, methyl hydroxyethyl cellulose and sodium methyl-carboxymethyl cellulose; there may also be used polyvinyl alcohols, polyoxyethylene glycols, the water-soluble polyoxyethylene/oxypropylene glycol block copolymers obtained by the addition of ethylene oxide to polyoxypropylene glycols (obtainable commercially under the name "Pluronic" (Registered Trade Mark)), low molecular weight initial stage condensation products or prepolymers of formaldehyde with melamine, urea, amides, carbamate, urons, ureins, ureides, imidazolidinones, pyrimidinones and triazinones and the lower alkyl ethers of such initial stage condensation products in which the alkyl groups contain from 1 to 3 carbon atoms, for example, methylated polymethylol melamine/urea, dimethylol and diethylol ethylene urea and dihydroxy dimethylol and diethylol ethylene urea resin precondensates. There may also be used polyvinyl pyrrolidone and water-soluble addition products of ethylene oxide with fatty alcohols and alkyl phenols such as cetyl alcohol, oleyl alcohol and mixtures thereof, octyl phenol and nonyl phenol.

In addition to the hydraulic cement, filler, water, polyisocyanate, dispersable isocyanate-reactive organic compound and stabiliser system described above, the composition of this invention may further comprise

an effective amount of a chain termination agent which may be a monohydric alcohol, a monocarboxylic acid, or an epoxy-group containing compound.

As examples of monohydric alcohols which may be used in the compositions of this invention there may be mentioned methanol, ethanol, propanol, butanol, hexanol, isooctanol, nonanol, decanol, dodecanol, and cetanol; unsaturated alcohols such as allyl alcohol and propargyl alcohol and the polyether alcohols obtained by the interaction of alkylene oxides, for example, ethylene oxide and/or propylene oxide, with monohydric alcohols. Terpineols, whether in pure form or mixed with hydrocarbons, for example in the form of pine oil may also be employed.

Monocarboxylic acids which may be used in the compositions include, for example, the acids obtainable by oxidation of any of the above-mentioned monohydric alcohols which contain two or more carbon atoms, the mixed fatty acids derived from any of the oils mentioned below and also elaeostearic, linolenic, linoleic, oleic and stearic acids.

As examples of compounds which contain at least one epoxy group per molecule there may be mentioned epoxidised oils, such as those derived from rape seed, tobacco seed, soya bean, safflower, sunflower seed, grape seed, niger seed, poppy seed, hemp seed, candle nut, rubber seed, linseed, perilla, stillingia, chia, corophor, tung, oiticica, Japanese wood, poyok, soft lumbang, castor, dehydrated castor, tall and fish oil. There may be used the products obtained by first esterifying the mixed fatty acids, obtainable from the above-mentioned oils by saponification, with monohydric alcohols, diols or polyols of higher functionality and then epoxidising the mixed esters so obtained. As further examples of compounds containing epoxy groups which may be used in the compositions of the present invention there may be mentioned the bisepoxy compounds derived from diphenylolpropane and epichlorohydrin, as well as those which contain at least one epoxycyclohexane or epoxycyclopentane group.

A further epoxy-compound which may be used is the product available commercially as "Cardura E", which is the glycidyl ester of the synthetic resin "Versatic 911" ("Cardura" and "Versatic" are Registered Trade Marks.)

The compositions of this invention may also comprise an effective amount of a plasticiser such as dibutyl phthalate, dinonyl phthalate, butyl benzyl phthalate, tricresyl phosphate, tritolyl phosphate, tri-(2-choloethyl) phosphate and chlorinated hydrocarbons such as those sold under the name "Cereclor" (Registered Trade Mark).

If desired, the compositions according to the present invention may also contain bitumen (by which is meant the residue from the distillation of crude petroleum which is essentially aliphatic in nature and substantially free from isocyanate-reactive groups), which in general improves flexibility and water resistance. Coal tar pitches may also be added to the compositions.

In general, although polyisocyanate and water are present together in the mixed cement compositions of this invention, foaming does not occur because the cement is present in sufficient amount and is basic enough to absorb the carbon dioxide which is liberated when isocyanates react with water. Should the composition be such that it has a tendency to foam, then this tendency can be minimised by incorporating in the composition an effective amount of an antifoaming agent, such as a basic compound of a metal selected from Groups I to IV inclusive of the Periodic Table (as set out on the inside back cover of the book "Advanced Inorganic Chemistry" by Cotton and Wilkinson, 2nd Edition, published 1966 by Interscience Publishers.) Such basic compounds may be oxides, hydroxides, basic salts, complex salts or double salts of metals and as examples there may be mentioned calcium oxide, magnesium oxide, barium oxide, sodium hydroxide, potassium hydroxide, lithium hydroxide, calcium hydroxide, barium hydroxide, magnesium hydroxide, cadmium hydroxide, calcium silicate, barium silicate, sodium silicate, lead hydroxide and basic lead acetate. Other antifoaming agents which may be employed include siloxanes such as poly-(siloxane), poly(alkylsiloxanes) and poly(dialkylsiloxanes).

The compositions may also contain cure accelerators which are known to increase the rapidity of the reaction between isocyanate groups and isocyanate-reactive (e.g., hydroxy) groups. Suitable accelerators include, for examples, organometallic compounds, metal salts and tertiary amines, specific examples of which are dibutyl tin dilaurate, tetrabutyl titanate, zinc octoate, zinc naphthenate, stannous octoate, stannic chloride, ferric chloride, lead octoate, potassium oleate, cobalt 2-ethylhexoate, N,N-dimethylcyclohexylamine, N,N-dimethylbenzylamine, N-ethylmorpholine, 1,4-diazabicyclo-2,2,2-octane, 4-dimethylaminopyridine, oxypropylated triethanolamines, beta-diethylaminoethanol and N,N,N′,N′,-tetrakis (2-hydroxypropyl) ethylenediamine.

Moreover, the composition of this invention may be formed into elements having a Terrazzo-like decorative effect by either (1) incorporating a filler (whether silica or otherwise) which is in the form of coarse particles into the above-mentioned compositions and, after spreading the composition, grinding or otherwise treating surface of the composition to expose the particles of filler; or (2) by first bonding coarse

particles of plastic or other material to the substrate, filling in between the bonded fragments with the blended cement composition, and grinding the hardened surface to expose the fragments of material.

The coarse particles employed for such Terrazzo-effect uses may be in the form of mass-pigmented plastic fragments of thermoplastic or thermosetting polymers or copolymers, for example, nylon polymers, polyvinyl chloride, vinyl chloride/vinyl acetate copolymers, urea/formadehyde polymers, phenol/formaldehyde polymers, melamine/formaldehyde polymers, acetal polymers and copolymers, acrylic polymers and copolymers, acrylonitrile/butadiene/styrene terpolymers, cellulose acetate, cellulose acetate butyrate, polycarbonates, polyethylene terephthalates, polystyrene, polyurethanes, polyethylenes and polypropylenes.

The mass-pigmented plastic may be in the form of chips or turnings and is conveniently the plastic waste resulting from the trimming of injection moulded articles or from other moulding processes.

Other particles which may be employed include materials selected from glass and stone fragments and stone aggregate. The glass fragments may be colourless or coloured. The stone, either in the form of fragments or aggregate, may be used in its natural colour or it may be artificially coloured, for example, by the application of a dyestuff or pigment to the surface. Provided that the compositions which are obtained by using these artificially coloured materials are only lightly ground, the suface colouring remains essentially intact.

Colourless plastic fragments may also be used as the particles. By coarse particles is meant those materials having a particle size not less than about 250 microns.

In any of the embodiments of this invention, there may also be used volatile organic solvents of the kind which are conventionally used in the formulation of polyurethane products, such solvents being inert towards isocyanate and hydroxyl groups. Suitable solvents include esters, ketones, hydrocarbons and halogenated hydrocarbons. Specific solvents which may be used are methyl ethyl ketone, methyl isobutyl ketone, 4-methyl-4-methoxypentan-2-one, ethyl acetate, butyl acetate, ethoxyethyl acetate, cyclohexanone toluene and xylene. It is preferred not to use such volatile solvents because they add to the cost of the compositions, cause pollution of the atmosphere and may give rise to a flammability hazard.

The proportions of the different components comprising the compositions of this invention may vary over a wide range, depending upon the specific ingredients (and additives) selected. In general, per 100 parts by weight of hydraulic cement there will be included from 5 to 500 parts by weight of water, from 10 to 10000 parts by weight of filler, from 5 to 5000 parts by weight of dispersable isocyanated-reactive organic compund, and from 5 to 5000 parts by weight of polyisocyanate. Preferably, for most combinations and applications, per 100 parts by weight of cement there will be employed from 10 to 100 parts by weight of water, from 25 to 5000 parts by weight of filer, from 10 to 250 parts by weight of dispersable isocyanate-reactive organic compounds, and from 10 to 500 parts by weight of polyisocyanate.

Based upon the proportions and amounts (per 100 parts by weight of dispersable isocyanate-reactive organic compound) discussed above with respect to the stabiliser system of this invention, one can easily determine how much poly(hydroxyalkyl)amine, ethoxylated alkyl phenol and fatty acid may be present for any given formulation.

The compositions of this invention are typically applied by first mixing all of the ingredients utilizing means well known to those of skill in the art such as cement mixers, forced paddling mixers and the like, until a satisfactory blend is obtained. The blended composition may then be applied to form a surface by any means typically employed for the application of cement compositions such as troweling, pouring, spraying and the like, as appropriate.

The invention is illustrated by the following Examples which are presented for illustrative purpose only and are not intended to limit the scope of the invention in any manner whatsoever. In such Examples, all reference to "parts" refers to parts by weight.

## Example 1

A stabilised suspension of a castor oil rosinate (which is produced as described below) is produced by blending 50 parts of such rosinate with 1.25 parts of an aqueous solution containing 27% by weight of ethoxylated (8-9 molar) nonyl phenol, 0.75 parts of N,N,N′,N′-tetrakis(2-hydroxypropyl)ethylene diamine, and 1 part of oleic acid in 25 parts of water. This stabilised dispersion exhibits desireable storage, low temperature and high temperature stability.

100 parts of this suspension are blended with 133 parts of Portland cement, 400 parts of sand (30 - 200 BS sieve-size; that is 0.05-0.0076 cm in diameter) and 100 parts of crude MDI (containing approximately

50% by weight of diphenylemethane-4,4′-diisocyanate, the remainder being isomers thereof and methylene-linked polyphenyl polyisocyantes containing more than two isocyanate groups), until an even dispersion is obtained.

This dispersion is applied to form a floor which is able to be walked upon in less than 24 hours after being laid.

The castor oil/rosin based product used in this Example is obtained by heating 320 parts of 1st pressings castor oil together with 80 parts of an esterified rosin modified phenol formaldehyde resol resin at 240°C for 45 minutes. The latter component is obtained by heating together natural rosin, glycerol and the condensation products of diphenylolpropane with approximately 4 moles of formaldehyde in the proportons 8.2:1.1:1.0 by weight at 275°C until the acid value of the material is less than 20 mg. KOH/kg.

## Example 2

A suspension is produced as in Example 1, except that the castor oil rosinate and oleic acid are replaced by 40 parts of a first pressing castor oil having a free fatty acid content of 1.5% by weight. This suspension exhibits desirable storage and temperature stability.

This suspension is blended into a cement composition as described in Example 1. This cement composition sets rapidly such that when laid as a flooring, such flooring may be walked upon within 24 hours.

## Example 3

A suspension is produced as in Example 1 except that the castor oil rosinate is replaced with 40 parts of oxypropylated glycerol having a hydroxyl value of 160. This suspension exhibits desireable storage and temperature stability. This suspension is formulated with a cement composition following the procedure of Example 1. This composition is spread to produce a flooring which can be walked up in less than 24 hours after being laid.

## Example 4

A suspension of a castor oil rosinate was prepared as described in the first part of Example 1 using 500 parts of the rosinate, 12.5 parts of the 27% aqueous solution of the ethoxylated nonyl phenol, 7.5 parts of the hydroxypropylated ethylenediamine, 10 parts by weight of oleic acid and 250 parts by weight of water.

Further suspensions were prepared in which one of the components thereof was omitted.

The suspensions were inspected at intervals to determine the stability thereof, lack of stability being indicated by the formation of a distinct water layer on the top of the emulsion. The components of each emulsion and the relative stability thereof are set out in Table One.

Table One

| Ex or Comp Ex | Components (a) (parts by weight) | | | | | Rel. Stab (b) |
|---|---|---|---|---|---|---|
| | COR | ENP | HED | OA | W | |
| 4 | 500 | 12.5 | 7.5 | 10 | 250 | 100 |
| A | 250 | NIL | 3.75* | 5.0 | 125 | 1.3 |
| B | 250 | 6.25 | NIL | 5.0 | 121.25 | 0.1 |
| C | 250 | 6.25 | 3.75* | NIL | 125 | 25 |

**Notes to Table One**

(a) COR is the castor oil resinate.
ENP is the ethoxylated nonyl phenol
HED is the hydroxypropylated ethylenediamine
OA is the oleic acid
W is water
* HED added as a 50% by weight solution in water, the amount of water added with the HED being included in the column for water.

(b) Relative Stability (Rel.Stab) is given by the relationship

$$\text{Rel.Stab} = \frac{\text{Stability of Comp Ex (in days)}}{\text{Stability of Ex 4 (in days)}} \times 100$$

Example 5

The procedure of Example 4 was repeated with the exception that the castor oil rosinate and oleic acid were replaced by a first pressing castor oil having a free fatty acid content of 0.4% by weight.

The components of each emulsion and the relative stability thereof are set out in Table Two.

Table Two

| Ex or Comp Ex | Components (a) (c) (parts by weight) | | | | Rel. Stab (d) |
|---|---|---|---|---|---|
| | CO | ENP | HED | W | |
| 5 | 500 | 12.5 | 7.5 | 250 | 100 |
| D | 500 | NIL | 7.5 | 250 | 50 |
| E | 500 | 12.5 | NIL | 250 | 6 |

**Notes to Table Two**

(a) is as defined in Notes to Table One.
(c) CO is castor oil having a free fatty acid content of 0.4% by weight.
(d) Rel.Stab is relative to the stability of Ex 5 but otherwise is as defined in Note (b) to Table One.

**Claims**

1. A stabilised dispersion comprising:
(a) a dispersable isocyanate-reactive organic compound;
(b) water; and
(c) a stabiliser system comprising;
(i) a poly(hydroxyalkyl)amine;
(ii) an ethoxylated alkyl phenol; and
(iii) fatty acid.

2. A dispersion as claimed in Claim 1 wherein the dispersable isocyanate-reactive organic compound is a polyol.

3. A dispersion as claimed in either Claim 1 or Claim 2 wherein between 0.5 and 20 parts by weight of

component (c) are present per 100 parts by weight of component (a).

4. A dispersion as claimed in any one of Claims 1 to 3 wherein the weight ratio of component (c) (iii) to component (c) (i) is between 1:10 and 10:1 and the weight ratio of component (c) (ii) to component (c) (i) is between 1:10 and 10:1.

5. A dispersion as claimed in any one of Claims 1 to 4 wherein component (c)(i) is N,N,N′,N′-tetrakis(2-hydroxypropyl) ethylenediamine, component (c)(ii) is an ethoxylated (8-9) nonyl phenol; and component (c)-(iii) is, or contains, an unsaturated fatty acid.

6. A curable composition comprising;

(a) an hydraulic cement;
(b) a filler;
(c) an organic polyisocyanate;
(d) a dispersable isocyanate-reactive organic compound;
(e) water, and
(f) a stabiliser system comprised of;
(i) a poly(hydroxyalkyl)amine;
(ii) an ethoxylated alkyl phenol; and
(iii) fatty acid.

7. A curable composition as claimed in Claim 6 wherein the hydraulic cement is selected from Portland cement, rapid hardening cements, low-heat cements, sulphate resisting cements, Portland blast furnace cement, masonry cements, natural cements, lime cements, selenitic cements, Pozzolanic cement, and calcium sulphate cements.

8. A curable composition as claimed in either Claim 6 or Claim 7 wherein the filler is a siliceous filler having a particle size in the range 0.076 mm - 4 cm.

9. A curable composition as claimed in any one of Claims 6 to 8 wherein said composition further comprises a plasticiser, a bitumen and/or a curing accelerator.

10. A curable composition as claimed in anyone of Claims 6 to 9 wherein there are used 5 - 500 parts by weight of water, 10 - 10000 parts by weight of filler, 5 - 500 parts by weight of dispersable isocyanate-reactive organic compound and 5- 5,000 parts by weight of polyisocyanate per 100 parts by weight of cement.

11. A method of producing a cement composition comprising the steps:

a) blending a mixture comprising an hydraulic cement, a filler, an organic polyisocyanate, a dispersable isocyanate-reactive organic compound, water, a poly(hydroxyalkyl)amine, an ethoxylated alkyl phenol and a fatty acid to form a cement composition; and;

b) forming said cement composition into a surface;

c) allowing said surface to harden.

12. A surface produced in accordance with the method of Claim 11.